# EUROPÄISCHE PATENTSCHRIFT

(11) **EP 0 464 916 B1**
(45) Veröffentlichungstag und Bekanntmachung des Hinweises auf die Patenterteilung: **10.01.1996**
(21) Anmeldenummer: 91201607.8
(22) Anmeldetag: 24.06.1991
(51) Int. Cl.: B32B 15/04, B23K 1/19, C04B 37/02, H01J 35/08

(54) **Hochtemperaturbeständiger Verbundkörper**
High-temperature-resistant composite body
Corps composite résistant aux hautes températures

(30) Priorität: 28.06.1990 AT 1376/90
(43) Veröffentlichungstag der Anmeldung: 08.01.1992
(73) Patentinhaber: PLANSEE Aktiengesellschaft, A-6600 Reutte, Tirol (AT)
(72) Erfinder: Kneringer, Günter, Dr., A-6600 Reutte (AT); Reheis, Nikolaus, Ing., A-6460 Jerzens (AT); Thalmann, Walter, A-6600 Breitenwang (AT)
(74) Vertreter: Lohnert, Wolfgang, Dr.

(56) Entgegenhaltungen:
- EP-A- 0 249 141
- EP-A- 0 399 621
- DE-A- 2 118 425
- DE-A- 2 755 746
- US-A- 4 700 882

## Beschreibung

Die Erfindung betrifft einen hochtemperaturbeständigen Verbundkörper, bestehend aus mindestens einem Teil aus Molybdän oder einer Molybdänlegierung und mindestens einem Teil aus Graphit, die durch ein Zirkonlot miteinander verbunden sind.

Für eine Reihe von Hochtemperaturanwendungen hat sich die Verwendung von Werkstoffverbunden aus Graphit und hochschmelzenden Metallen anstelle von hochschmelzenden Metallen durchgesetzt, wobei diese Werkstoffverbunde insbesondere eine bessere Wärmespeicherfähigkeit und ein geringeres spezifisches Gewicht auszeichnet.

Entscheidend für die Brauchbarkeit von Werkstoffverbunden aus Graphit und hochschmelzenden Metallen ist eine gute hochtemperaturfeste Verbindung zwischen Graphit und hochschmelzendem Metall. Dabei spielen eine ausreichende Haftung, aber auch eine ausreichende Langzeitbeständigkeit durch Unterdrückung der Kohlenstoff-Diffusion vom Graphit in den Metallteil eine gleichermaßen wichtige Rolle. Als Lot zur Verbindung von hochschmelzenden Metallen und Graphit hat sich Zirkon mit einem Schmelzpunkt von etwa 1850°C aufgrund seiner guten Benetzungseigenschaften und seines vergleichsweise geringen Preises für viele Anwendungen bewährt. Bei der Herstellung eines Verbundkörpers aus Molybdän bzw. einer Molybdänlegierung und Graphit bildet das Zirkonlot mit dem Molybdän ein Eutektikum mit einem Schmelzpunkt von etwa 1520°C. Da die Einsatztemperatur des Verbundkörpers aus Sicherheitsgründen mindestens 150°C unter dem Schmelzpunkt des Lotes liegen sollte, ist die Verwendung des Verbundkörpers bis zu einer Temperatur von etwa 1350°C beschränkt. Für bestimmte Anwendungen ist diese maximale Einsatztemperatur jedoch nicht ausreichend.

Die DE-B 21 15 896, die US-A 4597095, die DE-B 19 51 383 sowie die DE-B 21 18 425 beschreiben Röntgenröhren-Verbunddrehanoden, bei denen ein z.B. aus Molybdän oder einer Molybdänlegierung bestehender Teil mit einem oder mehreren Teilen aus Graphit verlötet ist. Als Lotmaterial wird beispielsweise Zirkon oder eine Zirkonlegierung verwendet, wobei zwischen den zu verlötenden Teilen und dem Lotmaterial noch Zwischenschichten angeordnet sein können.

Im Falle der DE-B 21 15 896 sind keine Zwischenschichten zwischen den zu verlötenden Teilen und dem Lot vorgesehen, so daß es hier zu den vorstehend erwähnten Problemen hinsichtlich der Bildung eines Eutektikums mit herabgesetztem Schmelzpunkt kommt.

Im Falle der US-A 4597095 wird zwischen Graphitteil und Lotmaterial eine Schicht aus einem kein Karbid bildenden Material, wie Platin, Palladium oder Rhodium, angeordnet. Diese Zwischenschicht verhindert zwar eine Karbidbildung des Zirkons, nicht jedoch eine Eutektikumsbildung zwischen Molybdän und Zirkon mit dem damit verbundenen Nachteil.

Im Falle der DE-B 19 51 383 werden die Lötflächen der Graphitteile vor dem Verlöten wahlweise mit einer Schicht aus Zirkonkarbid, Tantalkarbid oder Hafniumkarbid versehen. Auch bei dieser Ausführung wird eine Eutektikumsbildung zwischen Molybdän und Zirkon nicht verhindert.

Im Falle der DE-B 21 18 425 wird zwischen dem Molybdänteil und dem Lot eine Zwischenschicht aus Tantal und/oder Wolfram angeordnet. Als Schichtdicke dieser Zwischenschicht ist der Bereich zwischen 0,1 und 1 mm angegeben, wobei darauf hingewiesen wird, daß die angegebenen Grenzen nicht kritisch sind. Durch diese Zwischenschicht wird eine Eutektikumsbildung zwischen Molybdän und Zirkon zwar weitgehend verhindert. Die Zwischenschicht ist jedoch nicht geeignet, thermische Spannungen, die beim Lötvorgang aufgrund der unterschiedlichen Wärmeausdehnung von Molybdän und Graphit entstehen abzubauen, so daß es zu einer Rißbildung im Lotmaterial kommen kann.

Die Aufgabe der vorliegenden Erfindung besteht daher darin, einen Verbundkörper aus Molybdän oder einer Molybdänlegierung und Graphit zu schaffen, der für Einsatztemperaturen geeignet ist, die deutlich über 1350°C reichen, und gleichwohl die Verwendung von Zirkon als Lotmaterial gestattet.

Erfindungsgemäß wird dies, wie in Anspruch 1 beansprucht, dadurch erreicht, daß zwischen dem Teil aus Molybdän oder aus der Molybdänlegierung und dem Zirkonlot eine zweilagige Zwischenschicht bestehend aus einer 0,01 - 0,5 mm dicken Lage aus Vanadium und einer 0,1 - 0,5 mm dicken Lage aus einem der Elemente Wolfram, Tantal oder Niob mit dieser Schichtfolge ausgehend vom Teil aus Molybdän oder aus der Molybdänlegierung angeordnet ist.

Durch den erfindungsgemäßen Schichtaufbau der Zwischenschicht wird eine die maximal zulässige Einsatztemperatur herabsetzende Eutektikumsbildung zwischen Molybdän bzw. der Molybdänlegierung und dem Zirkonlot mit Sicherheit unterbunden. Der erfindungsgemäße Schichtaufbau ergibt zudem eine Duktilisierung der Lotschicht, was den Abbau durch den Lötprozeß hervorgerufener, thermischer Spannungen im Metall erleichtert und die Rißbildung im Lotmaterial, die aufgrund der unterschiedlichen Wärmeausdehnungen von Molybdän bzw. Molybdänlegierung und Graphit entsteht, deutlich herabsetzt. Wichtig dabei ist auch, daß die Schichtstärken der einzelnen Lagen der Zwischenschicht im angegebenen Schichtdickenbereich aufeinander abgestimmt sind. Durch den erfindungsgemäßen Schichtaufbau wurde auch erreicht, daß der Verbundkörper durch schichtweise Anordnung der einzelnen Lagen der Zwischenschicht und des Lotmateriales in Folienform zwischen dem Teil aus Molybdän und Graphit und Verlöten des geschichteten Aufbaues in einem einzigen Lötvorgang hergestellt werden kann.

Als besonders vorteilhaft hat es sich bewährt, wenn die Zwischenschicht aus 0,01 - 0,5 mm Vanadium und 0,2 - 0,5 mm Tantal besteht. Mit einer derartigen Zwischenschicht wird eine Einsatztemperatur des Verbundkörpers bis etwa 1600°C erreicht.

Die Herstellung dieser bevorzugten Ausführung des erfindungsgemäßen Verbundkörpers erfolgt, wie in Anspruch 5 beansprucht, vorzugsweise derart, daß die einzelnen Lagen der Zwischenschicht und das Zirkonlot in Folienform zwischen dem Teil aus Molybdän oder einer Molybdänlegierung und dem Graphitteil übereinander angeordnet werden und die Verlötung in einem Schritt in einem Hochvakuum-Lötofen bei Temperaturen zwischen 1740°C und 1790°C erfolgt.

Bei einer weiteren vorteilhaften Ausgestaltung der Erfindung wird ein Zirkonlot mit 5 - 20 Gew.% Niobanteil verwendet, wobei die Zwischenschicht aus 0,01 - 0,5 mm Vanadium und 0,1 - 0,5 mm Wolfram besteht. Mit dieser Zwischenschicht werden Einsatztemperaturen des Verbundkörpers bis etwa 1500°C ermöglicht.

Zur Herstellung dieses erfindungsgemäßen Verbundkörpers werden, wie in Anspruch 6 beansprucht, die einzelnen Lagen der Zwischenschicht und das Zirkonlot ebenfalls in Folienform zwischen dem Teil aus Molybdän oder aus einer Molybdänlegierung und dem Graphitteil übereinander angeordnet. Die Verlötung erfolgt in einem Schritt in einem Hochvakuum-Lötofen bei Temperaturen zwischen 1660°C und 1710°C.

Die Molybdänlegierung TZM hat sich insbesondere für erfindungsgemäße Verbundkörper bewährt.

Im folgenden wird die Erfindung anhand von Beispielen näher erläutert.

### Beispiel 1

Zur Herstellung eines erfindungsgemäßen Verbundkörpers wurde ein scheibenförmiger Graphitteil mit 100 mm Durchmesser und 10 mm Dicke im Ultraschallbad gereinigt. Ein scheibenförmiger TZM-Teil mit denselben Abmessungen wurde ebenfalls im Ultraschallbad gereinigt. Zum Verlöten der beiden Teile wurde der Graphitteil mit seiner zu verlötenden Oberfläche nach oben auf eine Unterlage aufgelegt. Auf den Graphitteil wurde Zuerst eine 0,2 mm starke Folie aus einem Zirkonlot mit 10 Gew.% Niobgehalt, dann eine W-Folie 0,2 mm und eine V-Folie 0,05 mm aufgelegt. Abschließend wurde der TZM-Teil auf die V-Folie aufgelegt. Der dermaßen geschichtete Aufbau wurde in einem Hochtemperatur-Hochvakuum-Lötofen eingebracht. Der Lötofen wurde nach dem Evakuieren innerhalb von 20 Minuten auf eine Temperatur von etwa 1700°C gebracht und 5 Minuten auf dieser Temperatur gehalten. Danach wurde der Ofen unter Vakuum auf Raumtemperatur abgekühlt.
Der Verbundkörper wurde durch Ultraschall zerstörungsfrei geprüft. Die Lötverbindung wies keine Risse und Lunker auf.

### Beispiel 2

Ein Verbundkörper wurde wie im Beispiel 1 hergestellt mit dem Unterschied, daß der Verbund, vom Graphitteil ausgehend, aus einer 0,2 mm starken Zr-Folie, einer 0,3 mm starken Ta-Folie, einer 0,05 mm starken V-Folie und abschließend dem TZM-Teil bestand. Die Lötung erfolgte wie bei Beispiel 1 bei einer Löttemperatur von 1760°C.

Die Beispiele stellen besonders vorteilhafte Ausgestaltungen dar, die Erfindung ist jedoch keinesfalls auf diese Ausführungen beschränkt. So ist es beispielsweise denkbar, die einzelnen Lagen der Zwischenschicht und eventuell auch das Lot durch Beschichtungsverfahren, wie CVD-Verfahren oder Plasmaspritzen, auf den zu verbindenden Teilen aufzubringen. Desgleichen können die angegebenen Schichtstärken der einzelnen Lagen der Zwischenschicht und des Lotes in größeren Bereichen variiert werden.

## Patentansprüche

1. Hochtemperaturbeständiger Verbundkörper, bestehend aus mindestens einem Teil aus Molybdän oder einer Molybdänlegierung und mindestens einem Teil aus Graphit, die durch ein Zirkonlot miteinander verbunden sind,
**dadurch gekennzeichnet**,
daß zwischen dem Teil aus Molybdän oder aus der Molybdänlegierung und dem Zirkonlot eine zweilagige Zwischenschicht bestehend aus einer 0,01 - 0,5 mm dicken Lage aus Vanadium und einer 0,1 - 0,5 mm dicken Lage aus einem der Elemente Wolfram, Tantal oder Niob mit dieser Schichtfolge ausgehend vom Teil aus Molybdän oder aus der Molybdänlegierung angeordnet ist.

2. Verbundkörper nach Anspruch 1, dadurch gekennzeichnet, daß die Zwischenschicht aus 0,01 - 0,5 mm Vanadium und 0,2 - 0,5 mm Tantal besteht.

3. Verbundkörper nach Anspruch 1, dadurch gekennzeichnet, daß ein Zirkonlot mit 5 - 20 Gew.% Niobanteil verwendet wird und die Zwischenschicht aus 0,01 - 0,5 mm Vanadium und 0,1 - 0,5 mm Wolfram besteht.

4. Verbundkörper nach einem der Ansprüche 1 - 3, dadurch gekennzeichnet, daß die Molybdänlegierung TZM ist.

5. Verfahren zur Herstellung eines Verbundkörpers nach Anspruch 2, dadurch gekennzeichnet, daß die einzelnen Lagen der Zwischenschicht und das Zirkonlot in Folienform zwischen dem Teil aus Molybdän oder aus einer Molybdänlegierung und dem Graphitteil übereinander angeordnet werden und die Verlötung in einem Schritt in einem Hochvakuum-Lötofen bei Temperaturen zwischen 1740°C und 1790°C erfolgt.

6. Verfahren zur Herstellung eines Verbundkörpers nach Anspruch 1, dadurch gekennzeichnet, daß die einzelnen Lagen der Zwischenschicht, die aus 0,01 - 0,5 mm Vanadium und 0,1 - 0,5 mm Wolfram bestehen, und das Zirkonlot in Folienform zwischen dem Teil aus Molybdän oder aus einer Molybdänlegierung und dem Graphitteil übereinander angeordnet werden und die Verlötung in einem Schritt in einem Hochvakuum-Lötofen bei Temperaturen zwischen 1660°C und 1710°C erfolgt.

7. Verfahren zur Herstellung eines Verbundkörpers nach Anspruch 6, dadurch gekennzeichnet, daß ein Zirkonlot mit 5 - 20 Gew.% Niobanteil verwendet wird.

## Claims

1. High-temperature resistant composite body, consisting of at least one part composed of molybdenum or a molybdenum alloy and at least one part composed of graphite, which are joined together by a zirconium solder, characterised in that a two-ply lining consisting of a 0.01 - 0.5 mm-thick layer of vanadium and a 0.1 - 0.5 mm-thick layer of one of the elements tungsten, tantalum or niobium in that sequence, starting with the part composed of molybdenum or a molybdenum alloy, is provided between the part composed of molybdenum or a molybdenum alloy and the zirconium solder.

2. Composite body according to claim 1, characterised in that the lining consists of 0.01 - 0.5 mm vanadium and 0.2 - 0.5 mm tantalum.

3. Composite body according to claim 1, characterised in that a zirconium solder with a niobium content of 5 - 20 % by weight is used, and the lining consists of 0.01 - 0.5 mm vanadium and 0.1 - 0.5 mm tungsten.

4. Composite body according to one of claims 1 - 3, characterised in that the molybdenum alloy is TZM.

5. Process for manufacturing a composite body according to claim 2, characterised in that the individual layers of the lining and the zirconium solder are disposed one on top of the other as sheets between the part composed of molybdenum or of a molybdenum alloy and the graphite part, and soldering is carried out in one step in a high-vacuum soldering furnace at temperatures between 1740°C and 1790°C.

6. Process for manufacturing a composite body according to claim 1, characterised in that the individual layers of the lining which consist of 0.01 - 0.5 mm vanadium and 0.1 - 0.5 mm tungsten and the zirconium solder are disposed one on top of the other in sheet form between the molybdenum or molybdenum alloy part and the graphite part, and soldering is carried out in one step in a high-vacuum soldering furnace at temperatures between 1660°C and 1710°C.

7. Process for manufacturing a composite body according to claim 6, characterised in that a zirconium solder with a niobium content of 5 - 20 % by weight is used.

## Revendications

1. Corps composite résistant aux hautes températures se composant d'au moins un élément de molybdène ou d'un alliage de molybdène et d'au moins un élément de graphite, qui sont assemblés entre eux par une brasure au zirconium,
caractérisé en ce qu'une couche intermédiaire en deux strates, composée d'une strate d'une épaisseur de 0,01 à 0,5 mm de vanadium et d'une strate d'une épaisseur de 0,1 à 0,5 mm de l'un des métaux: tungstène, tantale ou niobium est disposée, selon cette séquence de couches en partant de l'élément en molybdène ou en alliage de molybdène, entre l'élément en molybdène ou en alliage de molybdène et la brasure de zirconium.

2. Corps composite selon la revendication 1, caractérisé en ce que la couche intermédiaire se compose de 0,01 à 0,5 mm de vanadium et de 0,2 à 0,5 mm de tantale.

3. Corps composite selon la revendication 1, caractérisé en ce qu'une brasure de zirconium à teneur en niobium de 5 à 20% en poids est utilisée et en ce que la couche intermédiaire se compose de 0,01 à 0,5 mm de vanadium et de 0,1 à 0,5 mm de tungstène.

4. Corps composite selon la revendication 1 à 3. caractérisé en ce que l'alliage de molybdène est le TZM, un alliage de molybdène, de titane et du zirconium.

5. Procédé de fabrication d'un corps composite selon la revendication 2, caractérisé en ce que les strates individuelles de la couche intermédiaire et la brasure de zirconium sont disposées l'une au-dessus de l'autre sous forme de feuilles entre l'élément en molybdène ou en alliage de molybdène et l'élément en graphite et la brasure est réalisée en une étape dans un four de brasure sous vide élevé à des températures comprises entre 1740°C et 1790°C.

6. Procédé de fabrication d'un corps composite selon la revendication 1, caractérisé en ce que les strates individuelles de la couche intermédiaire qui se composent de 0,01 à 0,5 mm de vanadium et 0,1 à 0,5 mm de tungstène, et la brasure de zirconium sont disposées l'une au-dessus de l'autre sous forme de feuilles entre l'élément en molybdène ou en alliage de molybdène et l'élément en graphite et le brasage est effectué en une étape dans un four de brasure sous vide élevé à des températures comprises entre 1660°C et 1710°C.

7. Procédé de fabrication d'un corps composite selon la revendication 6, caractérisé par l'utilisation d'une brasure de zirconium à teneur en niobium de 5 à 20 % en poids.
